# FASCICULE DE BREVET EUROPEEN

(11) **EP 2 013 381 B1**
(45) Date de publication et mention de la délivrance du brevet: **27.03.2013**
(21) Numéro de dépôt: 07731357.5
(22) Date de dépôt: 25.04.2007
(51) Int. Cl.: C25C 3/08, C01B 31/00, C04B 38/00, C04B 35/52

(54) **CUVE D'ÉLECTROLYSE D'OBTENTION D'ALUMINIUM**
ELEKTROLYSEBEHÄLTER ZUM ERHALT VON ALUMINIUM
ELECTROLYSIS POT FOR OBTAINING ALUMINIUM

(30) Priorité: 03.05.2006 FR 0603937
(43) Date de publication de la demande: 14.01.2009
(73) Titulaire: CARBONE SAVOIE, 69200 Venissieux (FR)
(72) Inventeur: DREYFUS, Jean-Michel, F-69006 Lyon (FR)
(74) Mandataire: Malcoiffe, Julien
(86) Numéro de dépôt international: PCT/FR2007/000698
(87) Numéro de publication internationale: WO 2007/125195

(56) Documents cités:
- EP-A- 0 132 647
- EP-A- 1 344 846
- WO-A-2006/017348
- GB-A- 1 007 864
- US-A- 3 302 999
- US-A- 4 276 246
- US-A- 4 442 165
- US-A- 4 737 254
- CURTIS E L ET AL: "LIGHT METALS , THE UTILIZATION OF COMPOSITE CARBON-SILICON CARBIDE SIDEWALL BLOCKS IN CATHODES" LIGHT METALS 1996. PROCEEDINGS OF THE TECHNICAL SESSIONS PRESENTED BY THE TMS LIGHT METALS COMMITTEE AT THE 125TH. TMS ANNUAL MEETING, ANAHEIM, FEB. 4 - 8, 1996; [PROCEEDINGS OF THE TMS ANNUAL MEETING], WARRENDALE, TMS, US, vol. MEETING 125, 1 janvier 1996 (1996-01-01), pages 295-301, XP002413462 ISBN: 978-0-87339-312-6

## Description

L'invention concerne une cuve d'électrolyse d'obtention d'aluminium.

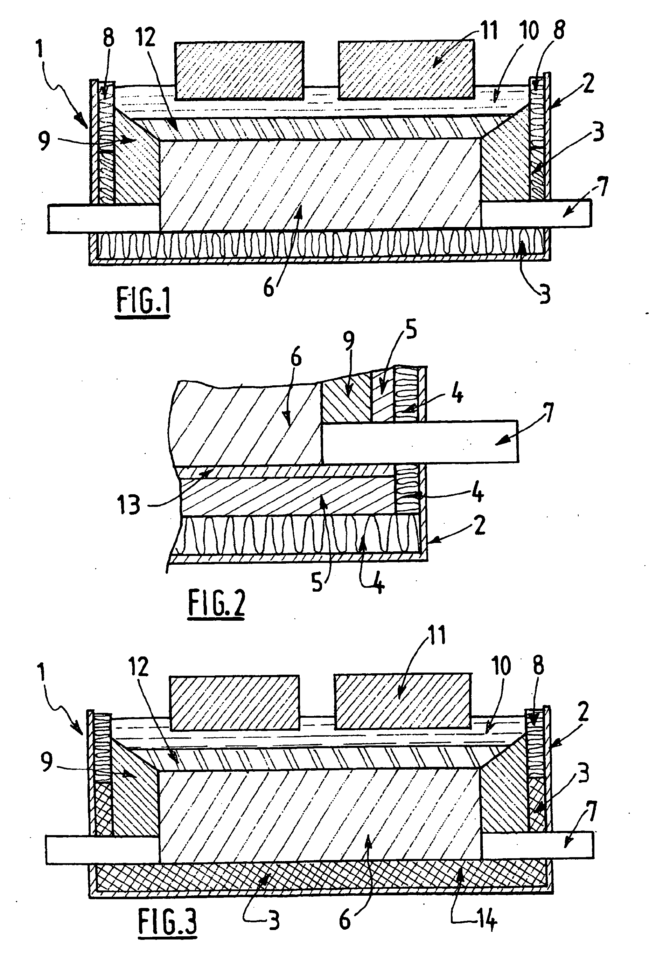

La figure 1 décrit une cuve d'électrolyse 1 classiquement utilisée pour l'électrolyse de l'aluminium. Celle-ci comporte :
- une coque extérieure en acier, appelée caisson 2,
- un isolant 3, placé à l'intérieur du caisson 2, composé d'une couche de briques isolantes 4 et d'une couche de briques réfractaires 5, protégeant le fond et remontant sur une partie
- des côtés du caisson 2, comme cela apparaît plus particulièrement en figure 2,
- une cathode 6 formée par plusieurs blocs cathodiques en carbone ou en graphite, disposés dans le fond du caisson 2 et équipés de barres collectrices 7 de courant,
- des dalles de côtés 8 à base de carbone ou de carbure de silicium, placées au niveau de la partie latérale supérieure du caisson 2, au niveau du bain d'électrolyse, et destinées à dissiper l'énergie thermique,
- de la pâte de brasque 9 formant un joint entre l'isolant 3 et/ou les dalles de côtés 8, et la cathode 6,
- un creuset délimité par les éléments contenus par le caisson 2 et destiné à accueillir le bain d'électrolyse 10,
- une anode 11 constituée d'au moins un bloc carboné, suspendue au-dessus du caisson 2 et destinée à être en contact avec le bain d'électrolyse en position de fonctionnement de la cuve 1.

Plus précisément, la couche de briques isolantes 4 est généralement composée de une ou plusieurs sous-couches de briques isolantes de 65 mm d'épaisseur chacune. De même, la couche de briques réfractaires 5 est généralement composée de une ou plusieurs sous-couches de briques réfractaires d'environ 65 mm d'épaisseur chacune.

Le bain d'électrolyse est composé principalement de cryolithe fondue (Na₃AlF₆ ou 3NaF-AlF₃) ou d'alumino-fluorure de sodium. Suivant les besoins de la production, des ajouts de fluorure de sodium (NaF) ou de fluorure d'aluminium (AlF₃) sont effectués pour modifier la composition du bain. D'autres additifs peuvent également être employés (CaF₂, LiF, ...).

Lors de l'électrolyse, de l'aluminium liquide 12 se forme sur la surface de la cathode 6 en contact avec le bain électrolytique. Le courant traverse successivement l'anode 11, le bain d'électrolyse, l'aluminium 12, la cathode 6 et quitte la cuve par les barres collectrices 7 de courant.

Afin de produire l'aluminium, on introduit l'alumine (Al₂O₃) dans le bain d'électrolyse de manière à obtenir de l'aluminium liquide 12. Celui-ci, sous l'effet de la gravité, se dépose sur la cathode 6.

L'aluminium liquide 12 ainsi produit est enlevé périodiquement de la cuve 1, le bain étant régulièrement alimenté en alumine.

La température du bain étant maintenue par effet Joule, lié au passage du courant, entre environ 950°C et 975°C, il est nécessaire d'isoler l'ensemble à l'aide de briques isolantes 4, disposées contre la surface interne du caisson, et de briques réfractaires 5, situées entre les briques isolantes 4 et les blocs cathodiques 6.

Cette isolation 3 fournit à la fois l'isolation thermique et l'isolation électrique nécessaire au fonctionnement de la cuve d'électrolyse 1.

Cette isolation peut être dégradée selon deux processus. Le premier intervient lors de la mise en chauffe et de la mise en service d'une cuve neuve. Une mauvaise étanchéité du creuset est liée à des ouvertures et des fissures qui peuvent apparaître au niveau de la cathode 6 et/ou de la pâte de brasque 9. Ces passages permettent à l'électrolyte et à l'aluminium liquide de passer sous les blocs cathodiques 6, d'atteindre l'isolant 3 disposé au fond de la cuve 1, puis de dégrader rapidement cet isolant 3.

Ce premier mécanisme de dégradation intervient très rapidement après le premier démarrage de la cuve. Il peut être évité par une mise en place soigneuse du joint en pâte de brasque 9 autour de la cathode 6, un préchauffage ajusté pour tenir compte de la cuisson de la pâte de brasque, et un démarrage permettant de conserver l'étanchéité du creuset.

Le second processus de dégradation intervient lors du fonctionnement normal de la cuve, lorsque des composants du bain d'électrolyse, notamment les fluorures et le sodium, pénètrent à travers les blocs cathodiques 6 dans l'isolant 3.

Ce mécanisme est un phénomène de vieillissement à long terme et est inhérent à la technologie de la cuve d'électrolyse telle que décrite ci-dessus.

Le phénomène de pénétration du bain dans la cathode 6 est détaillé ci-après.

Le livre « Cathodes in aluminium electrolysis », Aluminium-Verlag ISBN 3-87017-230-4, 1994 p.127, M. Sorlie et H.A. Oye montre que le carbone n'est pas mouillé par l'aluminium liquide et est difficilement mouillable par les fluorures fondus. Ainsi, même avec une porosité ou une perméabilité élevée, la pénétration du bain dans la cathode reste difficile, celle-ci étant réalisée en carbone ou en graphite.

Une telle pénétration du bain ne reste possible qu'après diffusion du sodium (Na) dans la cathode. Or cette diffusion du sodium résulte de la réaction suivante :

6 NaF + Al → 3Na + Na₃AlF₆

La diffusion du sodium, c'est-à-dire le déplacement de la réaction vers la droite, est favorisée par une forte polarisation électrique nécessaire au processus d'électrolyse.
Le sodium est ainsi amené à diffuser par intercalation dans la matrice carbonée de la cathode, c'est-à-dire dans son squelette et/ou ses porosités.

Cette diffusion par intercalation engendre une dilatation des blocs cathodiques et initie la pénétration du bain d'électrolyse par mouillage et capillarité dans la matrice carbonée.

Une solidification du bain par refroidissement génère des contraintes mécaniques de compression susceptible de faire fissurer les blocs cathodiques. Afin d'éviter un tel phénomène, l'isotherme de solidification du bain, de l'ordre de 888°C pour ce type de bain, est volontairement placé sous les blocs cathodiques afin de s'assurer que tout le bain d'électrolyse pénétrant la cathode reste sous forme liquide.

Le bain d'électrolyse liquide traverse la cathode et entre en contact avec l'isolant 3 disposé en fond de cuve, directement sous la cathode 6.

Du fait de certaines réactions qui ne seront pas détaillées ici, la composition du bain pénétrant la cathode est enrichie en fluorure de sodium.

Le bain réagit alors avec les matériaux utilisés pour former la couche isolante. Le sodium et les fluorures du bain attaquent à la fois la silice et l'alumine contenues dans les briques isolantes 4 et réfractaires 5 formant l'isolant 3. En outre, l'aluminium liquide réagit avec la silice de ces briques. Finalement, certains autres composants du bain électrolytique tels que le fluorure de lithium ou le fluorure de calcium réagissent avec l'isolant 3 et également avec le caisson métallique 2, de sorte que ceux-ci soient détériorés.

Les dégradations de la couche isolante réduisent les propriétés d'isolation thermique et entraînent des contraintes de compression puisque les produits de réaction du bain avec l'isolant ont un volume plus important que les matériaux utilisés à l'origine pour former l'isolant.

Ces contraintes provoquent une poussée verticale des blocs cathodiques, dirigée de bas en haut, ainsi qu'une compression du matériau d'isolation.

La poussée des blocs cathodiques vers le haut provoque leur mise en flexion, risquant à terme de les rompre.

La compression du matériau d'isolation engendre une augmentation de sa conductivité thermique et contribue ainsi à la diminution de l'isolation thermique. Une telle dégradation des propriétés d'isolation thermique rend plus difficile le contrôle de la température du bain d'électrolyse et provoque le refroidissement de la cathode, laissant ainsi apparaître des boues solides sur sa surface en contact avec le bain.

Tous ces phénomènes provoquent une baisse du rendement de la cuve et une détérioration de celle-ci.

En outre, la présence de fluorures issus du bain dans l'isolant pose des problèmes environnementaux lors du démontage des cuves mortes, les produits issus du démontage étant destinés à être mis en décharge. En effet, les fluorures tels que le fluorure de sodium (NaF), à l'origine dans le bain d'électrolyse, sont solubles dans l'eau et peuvent être entraînés par les eaux de ruissellement.

Il est donc nécessaire de passiver ces déchets par des traitement coûteux avant de pouvoir en disposer sans danger.

Afin de remédier à ces disfonctionnement, divers matériaux ont été utilisés pour former des barrières anti-pénétration 13 ayant pour but d'empêcher, de réduire ou de retarder le transport du sodium, de l'aluminium et du bain d'électrolyse vers la couche isolante.

Les barrières anti-pénétration 13 sont généralement disposées entre les blocs cathodiques 6 et la couche de briques réfractaires 5 formant une partie de l'isolant 3 en fond de cuve 1, comme cela apparaît plus particulièrement en figure 2.

L'article "Penetration barriers in the cathode of Hall-Héroult cells", Aluminum, 68, n1, Jahrgang 1992 p.64, K. Grjotheim et H.Kvande, présente notamment les avantages et les inconvénients des différentes techniques utilises.

C'est ainsi que des barrières anti-pénétrations connues sont réalisées à base de :
- plaques d'acier,
- de feuilles de graphites,
- de briques et de carreaux réfractaires,
- de poudres contenant ou non de l'alumine,
- de verre,
- de béton réfractaire.

L'utilisation de plaques d'acier offre une bonne protection contre le sodium mais de telles plaques sont attaquées par les autres composants du bain électrolytique.

Les feuilles de graphites permettent d'assurer une excellente protection contre la migration de la cryolithe, de ses produits de décomposition et des composants du bain mais reste inefficace contre le sodium. C'est pourquoi, les feuilles de graphites sont généralement associées à des plaques d'acier.

Toutefois, une telle association ne permet pas d'assurer l'isolation thermique et électrique sous les blocs cathodiques. Il est alors nécessaire de disposer un isolant en dessous de la barrière anti-pénétration ainsi formée, généralement sous forme de briques de faibles dimensions.

L'utilisation de briques et de carreaux réfractaires reste la technologie la plus répandue. Cependant, si ce type de barrière empêche la pénétration de produits liquides, elle ne protège pas contre la diffusion des fluorures solides. Ces derniers peuvent ainsi venir polluer les produits de débrasquage, c'est-à-dire les produits issus de l'enlèvement des revêtements des parois de la cuve morte.

De plus, l'utilisation de briques ou de carreaux de faibles dimensions nécessite généralement la pose de plusieurs milliers d'éléments pour former l'isolation d'une seule cuve.

Une cuve classique nécessite habituellement la pose de 10 000 briques de dimensions de l'ordre de 65 x 110 x 220 mm et de densité sensiblement égale à 2 g/cm³pour les plus denses, formant une couche isolante d'environ 20 tonnes.

Outre le poids important, le temps de mise en oeuvre pour la mise en place des briques et leur jointement est très important.

En ce qui concerne l'utilisation de poudres, celle-ci reste dangereuse puisque ces produits pulvérulents émettent de fines particules lors de leur mise en place. En outre, celle-ci reste complexe, la couche de poudre devant subir au moins une étape de vibration à l'intérieur de la cuve afin d'augmenter la densification de la couche.

De plus, une mauvaise densification initiale entraîne l'apparition de cavités sous la cathode, du fait des vibrations de la cuve lors de son fonctionnement, ces cavités se remplissant à terme de bain d'électrolyse fondu à haute température.

Or, si la conductivité de la couche de poudre vibrée reste acceptable, elle se dégrade de façon importante après réaction avec le bain.

En ce qui concerne l'utilisation de verres, ceux-ci forment avec le bain fondu un mélange extrêmement visqueux donc peu perméable. Toutefois, des produits peu visqueux du type silicate d'oxy-fluorure peuvent être formés et altérer l'efficacité du traitement.

Enfin, la mise en place de béton réfractaire dans la cuve nécessite une étape de mélange à l'aide de mélangeurs spécifiques, une étape de vibration du matériau dans la cuve et une étape de traitement thermique de séchage. La réalisation d'un tel isolant reste donc relativement complexe.

Ainsi, les différentes techniques précitées permettent de lutter, souvent de manière incomplète ou complexe, contre la dégradation de la couche isolante et contre la migration des fluorures.

Il reste également nécessaire de combiner plusieurs couches de matériaux différents afin de satisfaire à la double exigence de protection de la couche isolante et d'isolation thermique de la cuve.

L'objectif de la présente invention est donc de proposer un isolant qui n'est pas dégradé par le bain d'électrolyse, permettant d'éviter ou de réduire la migration des fluorures, remplissant les conditions d'isolation thermique requises et dont la réalisation est peu complexe.

A cet effet, l'invention concerne une cuve d'électrolyse d'obtention d'aluminium comprenant :
- un caisson,
- au moins un bloc cathodique disposé au moins en partie dans le caisson,
- au moins une anode, suspendue au-dessus de la cuve et plongée dans la partie supérieure de la cuve d'électrolyse,
- un isolant recouvrant au moins en partie la surface interne du caisson (2) et situé entre le bloc cathodique et le caisson,
- le caisson et les éléments qu'il contient délimitant un creuset destiné à accueillir un bain d'électrolyse en contact avec le bloc cathodique,
caractérisée en ce que l'isolant est réalisé au moins en partie à l'aide de blocs à base de carbone ayant une conductivité thermique inférieure à 1 W/m/K.

Du fait de la présence des barres collectrices, aucun courant ne passe dans la zone située sous les blocs cathodiques. Cette zone, en contact avec l'isolant situé en fond de cuve, n'est alors pas soumise à une polarisation électrique.

Comme vu précédemment, l'absence de polarisation électrique empêche la diffusion du sodium dans l'isolant en carbone ainsi formé. Elle empêche en outre la formation d'aluminium solide sous la cathode, ce dernier ne pouvant se former que par réduction cathodique.

Or la présence d'aluminium et la polarisation électrique sont deux éléments nécessaires à la diffusion du sodium dans une matrice carbonée, comme expliqué précédemment et comme cela apparaît dans la réaction chimique précitée. La diffusion du sodium étant nécessaire à la pénétration du bain d'électrolyse dans les blocs à base de carbone formant l'isolant, ces derniers reste imperméables au bain d'électrolyse.

Ainsi, sous les blocs cathodiques, là où aucun courant ne passe, car le potentiel électrique est constant, la couche d'isolant ne peut être dégradée.

De plus, la mise en place d'un tel isolant reste peu complexe puisque aucune étape de vibration ou de traitement préalable à l'intérieur de la cuve n'est nécessaire.

Finalement, la conductivité thermique des blocs d'isolation permet d'assurer la stabilité thermique de la cuve et le contrôle du procédé d'électrolyse.

Selon une caractéristique de l'invention, les blocs isolants à base de carbone ont une densité comprise entre 0,03 et 0,8 g/cm³, préférentiellement entre 0,1 et 0,6 g/cm³.

La faible densité volumique des blocs assure un poids faible de la couche isolante, ce poids pouvant être ramené à 4 tonnes, par comparaison avec une couche isolante classique de 20 tonnes, réalisée à partir de briques. Cette faible densité volumique permet en outre d'obtenir une importante résistance thermique de celle-ci.

Préférentiellement, la conductivité thermique des blocs à base de carbone est inférieure à 0,3 W/m/K.

Avantageusement, les blocs à base de carbone sont réalisés sous forme de dalles de dimensions de l'ordre de 120x440x880 mm.

Ces dimensions permettent d'obtenir un bon compromis entre la facilité de manutention des différents blocs et la pose de l'isolant.

L'utilisation de tels blocs permettent en outre de réduire considérablement le nombre d'éléments formant la couche isolante puisque seuls 310 blocs sont nécessaires, au lieu des 10 000 briques utilisées pour former un isolant classique.

L'épaisseur, bien qu'imposée par la résistance thermique minimale de l'isolant, est assez faible, ce qui permet de pouvoir augmenter le volume du bain électrolytique ou l'épaisseur du bloc cathodique.

Selon une caractéristique de l'invention la jonction entre les dalles est réalisée à l'aide de colles carbonées ou de ciments carbonés.

Les joints ainsi formés résistent, comme les blocs à base de carbone, aux attaques des différents composants du bain.

Préférentiellement, les blocs sont réalisés à base de mousse carbonée.

L'utilisation de mousse permet de simplifier la fabrication tout en réalisant des blocs ayant les caractéristiques recherchées, aussi bien en terme de résistance que de propriétés thermiques.

De toute façon, l'invention sera bien comprise à l'aide de la description qui suit, en référence au dessin schématique annexé représentant, à titre d'exemples non limitatifs, plusieurs formes d'exécution de cette cuve d'électrolyse.

Figure 1 est une vue en coupe transversale d'une cuve d'électrolyse de l'art antérieur ;

Figure 2 est une vue agrandie de la partie isolante de la cuve ;

Figure 3 est une vue correspondant à la figure 1, d'une cuve d'électrolyse selon l'invention.

Les éléments désignés par les références 1 à 12 se rapportant à la figure 3 sont, pour la suite de la description, identiques à ceux désignés par les mêmes références en figures 1 et 2.

La figure 3 représente une cuve d'électrolyse selon l'invention. Cette cuve diffère essentiellement de la cuve de l'art antérieur présentée dans le préambule en ce que l'isolant 3 n'est plus formé par un ensemble de briques isolantes 4 et réfractaires 5 et d'une barrière anti-pénétration 13, mais par des blocs 14 à base de carbone de faible conductivité thermique.

Ces blocs 14 sont constitués par exemple à base de mousse carbonée dont la conductivité thermique est inférieure à 1 W/m/K, préférentiellement inférieure à 0,3 W/m/K et dont la densité est inférieure à 0,8 g/cm³, préférentiellement inférieure à 0,6 g/cm³.

Les blocs ont par exemple une épaisseur de l'ordre de 120 mm, une largeur de 440 mm et une longueur de 880 mm.

Des joints de colle ou de ciment à base de carbone permettent de réaliser l'étanchéité entre les blocs, ce type de joint ne réagissant pas avec les produits contenus dans le bain d'électrolyse.

De tels ciments sont connus de l'homme du métier et correspondent aux ciments utilisés pour réaliser les joints entre les différentes dalles de côtés.

Les blocs 14 formant l'isolant 3 peuvent en outre être isolés des blocs cathodiques 6 par une couche d'alumine ou un autre produit pulvérulent ou par une couche de pâte de brasque. Cette couche peut faciliter la mise en place des blocs cathodiques et leur alignement dans la cuve.

Selon une autre possibilité de réalisation, l'isolant 3 est formé par deux couches de briques isolantes de 65 mm d'épaisseur chacune, surmontées d'une couche de blocs de 130 mm d'épaisseur.

Dans le cas où les briques isolantes et les blocs ont des conductivités thermiques respectivement égale à 0.15W/m/K et 0.30W/m/K, la résistance thermique de l'isolant est sensiblement égale à 1300 (unité arbitraire - u.a.).

A des fins de comparaison, la résistance d'un isolant classique constitué de deux couches de briques isolantes classiques surmontées de deux couches de briques réfractaires classiques, chacune des quatre couches ayant une épaisseur de 65 mm, est d'environ 985 u.a..

Comme cela apparaît des résultats précédents, le remplacement de deux couches de briques réfractaires par une couche de blocs d'épaisseur équivalente, permet d'améliorer d'environ 30% la résistance thermique de l'isolant.

Selon une autre forme de réalisation, une résistance thermique classique de 985 u.a. peut être obtenue en utilisant deux couches de briques isolantes telles que décrites précédemment, surmontée d'une couche de blocs d'épaisseur sensiblement égale à 36 mm, les blocs ayant comme précédemment une conductivité thermique de 0.30W/m/K .

On remarque que, dans ce cas, la même résistance thermique peut être obtenue avec un isolant de 166 mm au lieu de 260 mm.

Une telle diminution de l'épaisseur de l'isolant 3 permet d'augmenter l'épaisseur des blocs cathodiques 6 ou d'augmenter le volume du bain électrolytique.

L'utilisation d'une seule couche de blocs 14 à base de carbone, d'épaisseur sensiblement égale à 197 mm et de conductivité thermique égale à 0,2 W/m/K permet d'obtenir une résistance thermique équivalente aux isolants classiques, c'est-à-dire sensiblement égale à 985 u.a.

Une telle résistance thermique peut également être obtenue avec une couche de blocs 14 d'épaisseur sensiblement égale à 148 mm et de conductivité thermique égale à 0,15 W/m/K.

La forte résistance thermique permet d'assurer convenablement l'isolation de la cuve 1.

Comme cela ressort des valeurs précédemment citées, de tels blocs ont des conductivités thermiques équivalentes à celles des briques isolantes et inférieures à celles des briques réfractaires.

Par ailleurs, les blocs à base de carbone sont inertes à l'aluminium et au bain d'électrolyse dans la mesure où ils ne sont pas parcourus par un courant électrique, comme vu précédemment.

En effet, les blocs ne sont pas soumis au flux électrique du fait du leur positionnement par rapport à la cathode 6 et de leur grande résistivité électrique, celle-ci étant liée à la faible conductivité thermique.

En outre, l'utilisation de blocs présentant de telles dimensions permet de former l'isolant à partir d'environ 310 blocs alors que l'isolant de la cuve de l'art antérieur précité est composé d'environ 10 000 briques. On comprendra aisément que, du fait du faible poids et des dimensions des blocs 14, le montage de la cuve 1 est largement facilité.

En outre, l'allègement de la couche d'isolation à dépolluer et la faible contamination par les fluorures permettent de réduire les frais de dépollution et de mise en décharge lors du débrasquage de cuve morte.

Comme il va de soi, l'invention ne se limite pas à la seule forme d'exécution de ce système, décrite ci-dessus à titre d'exemple, mais elle en embrasse au contraire toutes les variantes. C'est ainsi notamment que les blocs à base de carbone ne sont pas nécessairement constitués à base de mousse mais peuvent être réalisés dans un matériau à base de carbone présentant des propriété thermiques similaires.

## Revendications

1. Cuve d'électrolyse (1) d'obtention d'aluminium comprenant :
- un caisson (2),
- au moins un bloc cathodique (6) disposé au moins en partie dans le caisson (2),
- au moins une anode (11), suspendue au-dessus de la cuve et plongée dans la partie supérieure de la cuve d'électrolyse,
- un isolant (3) recouvrant au moins en partie la surface interne du caisson (2) et situé entre le bloc cathodique (6) et le caisson (2),
- le caisson et les éléments qu'il contient délimitant un creuset (10) destiné à accueillir un bain d'électrolyse en contact avec le bloc cathodique (6),
**caractérisée en ce que** l'isolant (3) est réalisé au moins en partie à l'aide de blocs (14) à base de carbone ayant une conductivité thermique inférieure à 1 W/m/K.

2. Cuve d'électrolyse d'obtention d'aluminium selon la revendication 1, **caractérisée en ce que** les blocs (14) à base de carbone ont une densité comprise entre 0,03 et 0,8 g/cm³, préférentiellement entre 0,1 et 0,6 g/cm³.

3. Cuve d'électrolyse d'obtention d'aluminium selon l'une des revendications 1 et 2, **caractérisée en ce que** la conductivité thermique des blocs (14) à base de carbone est inférieure à 0,3 W/m/K.

4. Cuve d'électrolyse d'obtention d'aluminium selon l'une des revendications 1 à 3, **caractérisée en ce que** les blocs (14) à base de carbone sont réalisés sous forme de dalles de dimensions de l'ordre de 120x440x880 mm.

5. Cuve d'électrolyse d'obtention d'aluminium selon la revendication 4, **caractérisé en ce que** la jonction entre les dalles est réalisée à l'aide de colles carbonées ou de ciments carbonés.

6. Cuve d'électrolyse d'obtention d'aluminium selon l'une des revendications 1 à 5, **caractérisée en ce que** les blocs (14) sont réalisés à base de mousse carbonée.

## Claims

1. Electrolytic cell (1) for obtaining aluminium, including:
- a pot shell (2),
- at least one cathode block (6) arranged at least partially in the pot shell (2),
- at least one anode (11), suspended above the cell and dipping into the upper portion of the electrolytic cell,
- an insulation (3) at least partially covering the internal surface of the pot shell (2) and located between the cathode block (6) and the pot shell (2),
- the pot shell and the elements that it contains delimiting a crucible (10) intended to receive an electrolytic bath in contact with the cathode block (6),
**characterised in that** the insulation (3) is at least partially made of carbon-based blocks (14) having a heat conductivity lower than 1 W/m/K.

2. Electrolytic cell for obtaining aluminium according to claim 1, **characterised in that** the carbon-based blocks (14) have a density between 0.03 and 0.8 g/cm³, and preferably between 0.1 and 0.6 g/cm³.

3. Electrolytic cell for obtaining aluminium according to any one of claims 1 or 2, **characterised in that** the heat conductivity of the carbon-based blocks (14) is lower than 0.3 W/m/K.

4. Electrolytic cell for obtaining aluminium according to any one of claims 1 to 3, **characterised in that** the carbon-based blocks (14) are made in the form of slabs with a size on the order of 120 x 440 x 880 mm.

5. Electrolytic cell for obtaining aluminium according to claim 4, **characterised in that** the junction between the slabs is produced with carbonaceous glues or carbonaceous cements.

6. Electrolytic cell for obtaining aluminium according to any one of claims 1 to 5, **characterised in that** the blocks (14) are based on carbonaceous foam.

## Patentansprüche

1. Elektrolysebehälter (1) zur Gewinnung von Aluminium, umfassend:
- einen Kasten (2),
- mindestens einen Kathodenblock (6), welcher wenigstens zum Teil in dem Kasten (2) angeordnet ist,
- mindestens eine über dem Behälter hängend angeordnete Anode (11), welche in den oberen Teil des Elektrolysebehälters eingetaucht ist,
- eine die Innenfläche des Kastens (2) wenigstens zum Teil abdeckende Isolierung (3), welche zwischen dem Kathodenblock (6) und dem Kasten (2) angeordnet ist,
- wobei der Kasten und die darin enthaltenen Teile eine Wanne (10) zur Aufnahme eines Elektrolysebads abgrenzen, das mit dem Kathodenblock (6) in Kontakt ist,
**dadurch gekennzeichnet, dass** die Isolierung (3) wenigstens zum Teil mit Kohlenstoff-Blöcken (14) ausgebildet ist, die eine Wärmeleitfähigkeit kleiner als 1 W/m/K haben.

2. Elektrolysebehälter zur Gewinnung von Aluminium nach Anspruch 1, **dadurch gekennzeichnet, dass** die Kohlenstoff-Blöcke (14) eine Dichte im Bereich zwischen 0,03 und 0,8 g/cm³, bevorzugt zwischen 0,1 und 0,6 g/cm³ haben.

3. Elektrolysebehälter zur Gewinnung von Aluminium nach einem der Ansprüche 1 und 2, **dadurch gekennzeichnet, dass** die Wärmeleitfähigkeit der Kohlenstoff-Blöcke (14) kleiner als 0,3 W/m/K ist.

4. Elektrolysebehälter zur Gewinnung von Aluminium nach einem der Ansprüche 1 bis 3, **dadurch gekennzeichnet, dass** die Kohlenstoff-Blöcke (14) als etwa 120x440x880 mm große Platten ausgebildet sind.

5. Elektrolysebehälter zur Gewinnung von Aluminium nach Anspruch 4, **dadurch gekennzeichnet, dass** die Platten mit kohlenstoffhaltigem Kleber oder kohlenstoffhaltigem Zement miteinander verbunden sind.

6. Elektrolysebehälter zur Gewinnung von Aluminium nach einem der Ansprüche 1 bis 5, **dadurch gekennzeichnet, dass** die Blöcke (14) aus Kohlenstoff-Schaum hergestellt sind.
